# EUROPÄISCHE PATENTSCHRIFT

(11) **EP 4 278 428 B1**
(45) Veröffentlichungstag und Bekanntmachung des Hinweises auf die Patenterteilung: **04.09.2024**
(21) Anmeldenummer: 22701308.3
(22) Anmeldetag: 11.01.2022
(51) Int. Cl.: H02K 9/28, H02K 17/42, H02K 17/24, H02K 7/18, F03D 9/25, H01R 39/08

(54) **DYNAMOELEKTRISCHE MASCHINE MIT KÜHLUNG DES SCHLEIFRINGSYSTEMS**
DYNAMOELECTRIC MACHINE WITH SLIP RING SYSTEM COOLING
MACHINE DYNAMOÉLECTRIQUE À REFROIDISSEMENT DU SYSTÈME DE BAGUE COLLECTRICE

(30) Priorität: 18.01.2021 EP 21152087
(43) Veröffentlichungstag der Anmeldung: 22.11.2023
(73) Patentinhaber: Flender GmbH, 46395 Bocholt (DE)
(72) Erfinder: BINDER, Herbert, 94127 Neuburg (DE); BRUNNER, Georg, 84364 Bad Birnbach (DE); DEVINGTEL, Nicole, 94081 Fürstenzell (DE); FRIEDL, Daniel, 94081 Fürstenzell (DE); GARHAMMER, Thomas, 94124 Buechlberg (DE); GRUBER, Robert, 94099 Ruhstorf (DE); HRASKA, Lorenz, 84371 Triftern (DE); MEMMINGER, Oliver, 94127 Neuburg a. Inn (DE); ORTMEIER, Günther, 94099 Ruhstorf a. d. Rott (DE); REISINGER, Matthias, 94099 Ruhstorf a. d. Rott (DE); SCHIFFERER, Klaus, 94152 Neuhaus am Inn (DE); SENTEF, Markus, 94099 Ruhstorf (DE)
(74) Vertreter: Michalski Hüttermann & Partner Patentanwälte mbB
(86) Internationale Anmeldenummer: PCT/EP2022/050419
(87) Internationale Veröffentlichungsnummer: WO 2022/152685

(56) Entgegenhaltungen:
- EP-A1- 2 887 509
- EP-A2- 2 701 286
- DE-A1- 102013 021 745
- DE-C- 504 351
- JP-A- S56 162 953

## Beschreibung

Die Erfindung betrifft eine dynamoelektrische Maschine, insbesondere eine doppelt gespeiste Asynchronmaschine mit einem Schleifringsystem, als Generator einer Windkraftanlage.

Bei doppelt gespeisten Asynchronmaschinen wird im Rotor ein Drehstromsystem eingeprägt. Zur Stromübertragung wird dabei ein Schleifringsystem verwendet. Bei einem solchen Schleifringsystem wird über stationäre Bürsten das elektrische Drehstromsystem auf Schleifringe und damit den rotierenden Teil der Maschine - den Rotor - übertragen. Dabei wird das Drehstromsystem von den Schleifringen über entsprechende Leiter an die Läuferwicklung des Rotors geführt.

Ein derartiges Schleifringsystem für eine dynamoelektrische Maschine, insbesondere einer doppelt gespeisten Asynchronmaschine, kommt beispielsweise bei Windkraftanlagen zum Einsatz. Hier besteht der Bedarf, dass die elektrischen Maschinen bzw. die Generatoren und ihre Komponenten immer kompakter gestaltet werden. Dies führt dazu, dass bei gleichbleibender Baugröße die Schleifringkomponenten thermisch immer höher belastet werden, da die Temperaturen, insbesondere von Schleifringen, Schleifringbürsten und Bürstenhalter stark ansteigen.

Somit besteht ein Bedarf, sämtliche Komponenten der elektrischen Maschine, insbesondere auch das Schleifringsystem möglichst effizient zu kühlen, um so zu vermeiden, dass die zulässigen Höchsttemperaturen überschritten werden und der Betrieb des Generators nicht mehr gewährleistet werden kann.

Die steigenden Temperaturen im Schleifringsystem, die durch immer höhere Leistungen verursacht werden, wurden bisher durch Vergrößerung der Oberflächen (Schleifring, Bürsten, Gehäuse) versucht zu kompensieren, so dass sich die Temperaturen wieder im zulässigen Bereich befinden. Zusätzlich sorgt ein Lüfter im Schleifringgehäuse für Luftzirkulation, indem Luft von außen (Innenraum der Gondel) durch das gesamte Schleifringsystem geführt wird und somit für die notwendige Kühlung des Systems sorgt.

Des Weiteren ist aus der EP 3 322 047 A1 eine Schleifringeinheit bekannt, bei der Isoliersegmente zwischen Schleifringen Ausprägungen zur Kühlung aufweisen.

Aus der JP 56 162 953 A ist ein Schleifringsystem mit einer Hohlwelle bekannt, wobei die Hohlwelle mit zwei Stromleitungen gefüllt ist. Zur Kühlung sind vier sich axial erstreckende, umfänglich verteilte Luftpassagen in der Hohlwelle vorgesehen.

Aus der EP 2 887 509 A1 ist eine dynamoelektrische Maschine, insbesondere doppelt gespeiste Asynchronmaschine (ASM), bekannt mit einem Stator und einem auf einer Welle drehfest angeordneten Rotor mit jeweils einem Wicklungssystem, wobei das Wicklungssystem des Rotors über ein Schleifringsystem elektrisch kontaktierbar ist,
einer elektrischen Energieübertragungseinheit des Schleifringsystems, insbesondere einer Bürsteneinheit, wobei pro elektrischer Phase eine oder mehrere Bürsten einem Schleifring zugeordnet sind, wobei die Bürsten an einer Bürstenhalterung angeordnet sind,
einem Schleifringkörper des Schleifringsystems, der axial hintereinander angeordnete, einer elektrischen Phase zugeordnete Schleifringe aufweist, die voneinander isoliert beabstandet sind, wobei der Schleifringkörper mit der Welle drehfest verbunden ist und zumindest abschnittsweise zwischen der Innenseite des Schleifringkörpers und der Welle einen axial beidseitig offenen Hohlraum bildet, wobei die Welle zumindest im Bereich des Schleifringsystems eine Hohlwelle ist, wobei am Hohlraum axial innen Ausnehmungen vorgesehen sind, durch die ein Kühlmedienstrom axial in den Hohlraum eingeleitet werden kann, wobei der Hohlraum als umfängliche Aussparung ausgeführt ist, so dass der Schleifringkörper zumindest auf zwei umfänglich verlaufenden axial voneinander beabstandeten Begrenzungselementen aufliegt, von denen das erste axial verlaufende Ausnehmungen zum Einleiten des Kühlmedienstromes hat, und dass das erste Begrenzungselement am gesamten Umfang die axial verlaufenden Ausnehmungen zur Zufuhr des Kühlmedienstromes hat. Diese Vorrichtung bildet den Oberbegriff des Anspruchs 1.Sie bietet bereits eine effektive Kühlung.

Ausgehend davon liegt der Erfindung deshalb die Aufgabe zugrunde ein Schleifringsystem einer dynamoelektrischen Maschine, insbesondere einer doppeltgespeisten Asynchronmaschine, vor allem einer Windkraftanlage, bezüglich der Kühlleistung nochmals zu verbessern und dabei eine möglichst günstige Herstellung anzustreben.

Die Lösung der gestellten Aufgabe gelingt durch eine dynamoelektrische Maschine, insbesondere doppelt gespeiste Asynchronmaschine (ASM) mit den Merkmalen des Anspruchs 1.

Das Besondere an der Erfindung ist, dass in dem dem Schleifringsystem zugeordnetem Hohlwellenabschnitt die Zuleitungen zum Wicklungssystem des Rotors geführt sind, dass das zweite Begrenzungselement axial verlaufende Ausnehmungen zur Abfuhr des Kühlmedienstromes hat, dass die Begrenzungselemente durch eine Schrumpfung einstückig mit der Innenseite des Schleifringkörpers und/oder der Welle verbunden sind, und dass die Begrenzungselemente am gesamten Umfang axial verlaufende Ausnehmungen zur Zu- und Abfuhr des Kühlmedienstromes haben. Der vom Schleifringsystem gebildete Hohlraum wird also erstmals zur Führung und Kühlung der thermisch hoch belasteten Stromzuleitungen zu den Rotorwicklungen genutzt.

Erfindungsgemäß wird die Kühlleistung dadurch verbessert, dass nicht nur die Bürsten, sondern auch die Zuleitungen zum Wicklungssystem des Rotors gekühlt werden. Dazu werden die Zuleitungen zumindest im Bereich des Schleifringsystems innerhalb der Welle geführt, die dazu dort natürlich hohl ausgebildet sein muss. Dann - also im Betrieb - wird Kühlmedium (bevorzugt Kühlluft) durch den Hohlraum zwischen Welle und Schleifringkörper geführt, also axial die Hohlwelle umstreichend und kühlend. Dazu sind Ausnehmungen am axialen Anfang und am axialen Ende des Hohlraums vorgesehen, durch die die Kühlluft axial geführt wird. Die Kühlluft wird axial direkt zum Austrittsbereich aus dem Schleifringsystem - also zum Ansaugbereich eines Gebläses oder Lüfters geführt. Die direkte axiale Anblasung oder Absaugung erhöht den Luftdurchsatz und verbessert die Kühlleistung. Die Erfinder haben erkannt, dass gerade die Kühlung der Zuleitungen wichtig ist - neben der oder zusätzlich zur Kühlung der Schleifbürsten.

Damit lässt sich nun erfindungsgemäß über den axial beidseitig offenen Hohlraum mit axialen Zutritts- und Abgabeöffnungen ein innengekühlter Schleifringkörper schaffen. Es ist dabei nicht nur der Schleifringkörper von radial innen kühlbar, sondern der Hohlraum trägt u.a. auch zur Kühlung der Welle und der Zuleitungen in diesem Bereich der Welle bei. Der Hohlraum bildet dort also eine Wärmesenke im Betrieb des Schleifringsystems und damit der dynamoelektrischen Maschine.

Da die Welle zumindest in dem axialen Bereich des Schleifringkörpers hohl ausgeführt ist, um über elektrische Leiter die Erregerleistung von dem Schleifringsystem in den Rotor bzw. Läufer zu führen, sind durch den kühlbaren Wellenabschnitt auch die dort verlaufenden Leiter kühlbar.

Die Leiter sind als flexible Leiter, beispielsweise Litzenleiter oder als starre Leiter, in Form eines Schienensystems ausgeführt und dienen der Erregung eines Wicklungssystems des Rotors bzw. Läufers.

Durch die erfindungsgemäße Ausgestaltung des Schleifringkörpers sind nunmehr der Schleifringkörper und zusätzlich folgende Komponenten kühlbar: Die Welle, insbesondere der axiale Wellenabschnitt, und bei einer Hohlwelle die in der Welle verlaufenden, insbesondere angeordneten Litzenleiter. Mit anderen Worten, der Schleifringkörper, die Welle und die Leiter für die Erregerleistung, die in der Welle, bzw. dem axialen Hohlwellenabschnitt verlaufen, können nunmehr zielgerecht gekühlt werden, d.h. die Wärmelast dieser Komponenten kann durch ein Kühlmittel, insbesondere einen Kühlluftstrom, aufgenommen werden.

Die Schleifringe weisen eine Ringform auf, d.h. sie sind innen hohl und weisen eine definierte Ringbreite auf. Sie dienen der Übertragung von elektrischer Energie eines statischen Versorgungssystems auf einen rotierenden Teil (Läufer) einer doppelgespeisten Asynchronmaschine. Die Übertragung findet dabei in der Regel mittels (Schleif-)Bürsten aus Kohle statt, die entlang einer Oberfläche der Schleifringe geführt werden und dabei elektrische Energie auf die Schleifringe übertragen, die diese dann über elektrische Leiter dem Wicklungssystem des Läufers zur Verfügung stellt.

Die einzelnen Schleifringe jeder elektrische Phase sind in axialer Richtung jeweils von Isoliersegmenten umgeben, die die Schleifringkörper gegeneinander elektrisch isolieren. Ein Erdungsring ist gegenüber dem benachbarten Schleifring ebenfalls isoliert. Am anderen axialen Ende des Schleifringkörpers ist ein Tragring angeordnet, der mittels Verbindungsmittel (z.B. Bolzen) u.a. mit den einzelnen Schleifringen und den Isolierkörpern verbunden ist, um dem Schleifringkörper die nötige mechanische Stabilität zu verschaffen.

Der Schleifringkörper weist bei einem zu übertragenden Drehstromsystem drei Schleifringe, einen Erdungsring, der mit der Tragstruktur elektrisch verbunden ist, und eine Isolierhülse auf, um die Schleifringe gegenüber dem Erdungsring und/oder untereinander zu isolieren. Die Isolierhülse ist auf dem jeweiligen Abschnitt der Tragstruktur angeordnet.

Regelmäßig wird über jeden Schleifring eine andere elektrische Phase des Drehstromsystems geführt. Der Erdungsring ist mit dem Erdungssystem beispielsweise der dynamoelektrischen Maschine und/oder einer Gesamtanlage verbunden.

Erfindungsgemäß ist der Hohlraum als umfängliche Aussparung ausgeführt, so dass der Schleifringkörper zumindest auf zwei umfänglich verlaufenden voneinander beabstandeten Endabschnitten bzw. Begrenzungselementen mit der Welle drehfest verbunden ist und so den Hohlraum schafft, der einen Kühlabschnitt darstellt. Diese Endabschnitte bzw. Begrenzungselemente sind insbesondere als Ringe oder Stege ausführbar. Sie sind Teil der Tragstruktur und/oder der Welle. Damit sind sie einstückig mit dem einen oder dem anderen Teil ausgebildet und formen durch ein axiales Aufstecken des Schleifringkörper auf die Welle bzw. Hohlwelle den Kühlabschnitt. In den Endabschnitten bzw. Begrenzungselementen, insbesondere den Ringen bzw. Stegen, sind axial verlaufend Ausnehmungen vorhanden, die die oben beschriebene Kühlung ermöglichen. Dabei sind nun am Umfang der Tragstruktur und/oder Welle in dem Bereich der drehfesten Verbindung, erfindungsgemäß einer Schrumpfung, diese Ausnehmungen vorgesehen. Diese Ausnehmungen sind sowohl auf der Lagerseite (also der dem Läufer zugewandten Seite) als auch auf der Anschlussseite (also der dem Läufer abgewandten Seite) vorgesehen.

Die Kühlung erfolgt beispielsweise nun derart, dass auf der Lagerseite durch weitere Ausnehmungen am Erdungsring Kühlluft angesaugt oder von einem Gebläse/Lüfter dorthin gedrückt wird. Diese Kühlluft gelangt durch den Kühlabschnitt, also über diese Ausnehmungen der Endabschnitte, in den Hohlraum, und nimmt dort die Wärmelast auf. Über einen Lüfter, beispielsweise auf der Anschlussseite, wird die erwärmte Luft über Öffnungen in einem Schleifringgehäuse nach außen befördert. Dort wird diese erwärmte Luft ausgestoßen oder rückgekühlt.

In einer weiteren Ausführungsform ergänzt die oben genannte Kühlung einen vorhandenen Kühlkreislauf, bei dem durch Radiallüfter Bürsten und Schleifringoberfläche bereits gekühlt werden. Durch den innengekühlten Schleifringkörper liegt damit ein weiterer Kühlkreislauf für die Welle, die in der Welle verlaufenden Leiter, als auch den Schleifringkörper vor. Durch diesen Kühlkreislauf werden die Temperaturen der Litzenleiter oder eines Schienensystems in der Welle und des Schleifringkörpers durch den zusätzlich geschaffenen Kühlkreislauf deutlich reduziert. Somit sind höhere Leistungen mit den gleichen Komponenten im gleichen Bauraum des Schleifringsystems realisierbar, was sich äußerst kostensparend auswirkt.

Durch diese Konstruktion wird kühle Umgebungsluft -oder bei geschlossenem System rückgekühlte Luft - durch den stark erwärmten Bereich zwischen Welle und Schleifringkörper, also den Hohlraum, geführt und somit werden auch die Leiter, insbesondere Litzenleiter in der Welle bzw. dem Hohlwellenabschnitt gekühlt. Die Abfuhr der erwärmten Luft geschieht durch Öffnungen am Erdungsring und durch Ausnehmungen auf der Lager- und auf der Anschlussseite am gesamten Umfang des Schleifringkörpers in den Endabschnitten. Die kühlere Luft wird durch diese Öffnungen und die Ausnehmungen in den Hohlraum zwischen Welle und Schleifringkörper geführt.

Der zu erzeugende Luftstrom wird durch einen eigenen oder einen bereits vorhandenen Lüfter im Schleifringgehäuse unterstützt. Die Luft wird dadurch direkt an die erwärmten Stellen des Schleifringkörpers, der Welle und indirekt der Litzenleiter geführt. Die Bereiche zwischen Welle, Schleifringkörper und der Litzen bleiben dadurch in dem zulässigen Temperaturbereich und eine Überhitzung des Schleifringsystems wird somit verhindert. Ein Schleifringkörper mit diesem Kühlkonzept kann somit für deutlich höhere Leistungen als bisher eingesetzt werden.

Konkret kann der Hohlraum radial innerhalb des Schleifringkörpers geschaffen werden, indem im Bereich des angestrebten Hohlraumes die Welle eine Durchmesserreduktion über eine vorgegebene axiale Länge und/oder der Schleifringkörper eine Durchmessererweiterung aufweist. Damit ist der Schleifringkörper zumindest über zwei umfänglich verlaufende voneinander beabstandete Begrenzungselemente, wie Ringe bzw. Stege mit der Welle drehfest verbunden. Damit stellt sich der Hohlraum ein, der einen Kühlabschnitt darstellt. Die Begrenzungselemente, also die Ringe bzw. Stege sind Teil der Tragstruktur des Schleifringkörpers und/oder der Welle. Damit sind sie einstückig mit dem einen oder dem anderen Teil ausgebildet und formen durch ein axiales Aufstecken des Schleifringkörper auf die Welle bzw. Hohlwelle den Kühlabschnitt. In den Begrenzungselementen, z.B. den Ringen bzw. Stegen, sind axial verlaufend Ausnehmungen vorhanden, die die oben beschriebene Kühlung ermöglichen.

Der Hohlraum kann zur Steigerung der Kühleffizienz mäandernde oder labyrinthähnliche Strukturen aufweisen, die die Verweildauer eines Kühlluftstromes im Hohlraum verlängern und damit dem Kühlluftstrom gestatten, dort eine höhere Wärmelast aufzunehmen.

Die Strukturen können eigene, einlegbare Elemente sein oder bereits in den Schleifringkörper und/oder die Welle eingearbeitet sein.

Grundsätzlich werden durch die Kühlung des an der elektrischen Maschine axial anliegenden Schleifringkörpers auch die Temperaturen der elektrischen Maschine, wie beispielsweise Welle und Rotor, deutlich reduziert.

Die dadurch niedrigere Temperatur des Schleifringsystems erlaubt kleinere Baugrößen der Schleifringkörper bzw. des Schleifringsystems. Das Schleifringsystem kann dadurch mit mehr Bürsten pro Phase belastet werden, was ohne eine derartige Kühlung nicht möglich wäre. Somit sind höhere Leistungsstufen bei gleichem Bauvolumen des Schleifringsystems als bisher realisierbar.

Eine zusätzliche Kühlung des Schleifringsystems erfolgt außerdem durch entsprechend gestaltete Schleifringe, beispielsweise mit Rillen in den Laufflächen, die einen radialen Luftzug ermöglichen, als auch mit axialen Bohrungen im Schleifring, die eine axiale Kühlluftströmung ermöglichen. Ebenso können ergänzend oder stattdessen die Isoliersegmente zwischen den Schleifringen eine lüfterähnliche Gestaltungen aufweisen, um eine Verwirbelung im Schleifringgehäuse bei Drehung des Schleifringkörpers zu schaffen.

Ebenso kann eine Kühlung der Bürsteneinrichtung ergänzend vorgenommen werden, indem die Bürstenschächte mit oberflächenvergrößernden Maßnahmen versehen worden sind. Ebenso tragen gezielt ausgerichtete Luftströme mittels Fremdlüfter und/oder Leitvorrichtungen zur Kühlung innerhalb des Schleifringgehäuses bei.

Die Schleifringe, deren Laufflächen, die Bürsten , die Kabelzuleitungen und andere Bauteile des Systems bleiben durch diese Maßnahmen somit in einem betriebsgerechten Temperaturbereich. Der Betrieb der dynamoelektrischen Maschine ist so gegen Überhitzung geschützt. Damit können insgesamt wesentlich kleinere, günstigere Bauteile verwendet werden, und somit ein problemloser Betrieb der elektrischen Maschine sichergestellt werden. Neben einer Anwendung bei Generatoren, beispielsweise für Windkraftanlagen, kann die Erfindung auch bei Motoren zum Einsatz kommen.

Die Kühlkreisläufe können als geschlossene Kühlkreisläufe oder offene Kühlkreisläufe ausgebildet sein. Bei einem geschlossenen Kühlkreislauf wird das Kühlmedium, z.B. Luft, gezielt rückgekühlt, beispielsweise durch einen Wärmetauscher. Bei einem offenen Kühlkreislauf wird das Kühlmedium, z.B. Luft, aus der Umgebung verwendet und erwärmt an die Umgebung wieder abgegeben.

Die Erfindung sowie weitere vorteilhafte Ausgestaltungen der Erfindung werden im Folgenden anhand prinzipiell dargestellter Ausführungsbeispiele näher erläutert, darin zeigen:
- FIG 1: Längsschnitt einer dynamoelektrischen Maschine,
- FIG 2: Längsschnitt eines Schleifringkörpers,
- FIG 3: eine teilperspektivische Darstellung eines Schleifringkörpers,
- Fig 4: eine weitere perspektivische Darstellung eines Schleifringkörpers,
- FIG 5: Längsschnitt eines Schleifringsystems,
- FIG 6: Längsschnitt eines Schleifringsystems mit prinzipieller Darstellung eines Kühlluftstromes,
- FIG 7: perspektivische Darstellung eines offenen Schleifringsystems.

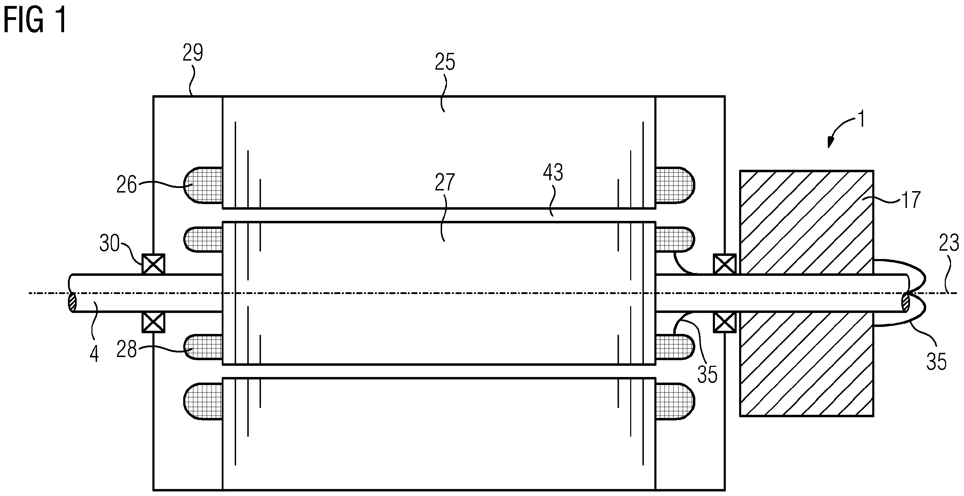

FIG 1 zeigt in einem prinzipiellen Längsschnitt eine dynamoelektrische Maschine 24 in einem Gehäuse 29. In dem Gehäuse 29 ist ein Stator 25 eingesetzt, der ein Wicklungssystem 26 in nicht näher dargestellten Nuten eines Blechpakets des Stators 25 aufweist. An den Stirnseiten des Stators 25 sind durch das Wicklungssystem 26 Wickelköpfe gebildet. Durch einen Luftspalt 43 vom Stator 25 beabstandet, befindet sich ein drehbar gelagerter Rotor 27 mit einem Wicklungssystem 28, das an den Stirnseiten des Rotors 27 ebenfalls Wickelköpfe ausbildet. Der Rotor 27 ist über Lager 30 und Lagerschilde am Gehäuse 29 der Maschine 24 abgestützt.

Zur elektrischen Erregung des Rotors 27 befindet sich in axialer Verlängerung der dynamoelektrischen Maschine 24 ein Schleifringsystem 1, das über Zuleitungen 35 mit dem Wicklungssystem 28 des Rotors 27 verbunden ist. Dabei verlaufen die Zuleitungen 35 in einem Hohlwellenabschnitt der Welle 4.

Das Schleifringsystem 1 weist, wie dies auch den folgenden Figuren zu entnehmen ist, einen Schleifringkörper 2 und eine Bürsteneinheit 14 auf, die in einem Schleifringgehäuse 17 untergebracht sind. Der Schleifringkörper 2 weist dabei axial hintereinander angeordnete Schleifringe 3 auf, die jeweils von einem Isoliersegment 7 axial beabstandet sind. An einer Stirnseite des Schleifringkörpers 2 befindet sich ein Erdungsring 6 und an der anderen Stirnseite des Schleifringkörpers 2 befindet sich ein Isolationsring 5. An diesem Isolationsring 5 treten Kontaktbolzen 8 axial aus, die jeweils mit dem jeweils zugeordneten Schleifring 3 elektrisch kontaktiert sind.

Die Bürsteneinheit 14 ist in einem Schleifringgehäuse 17 positioniert, und weist pro elektrischer Phase, also pro Schleifring 3 eine oder mehrere Bürsten 15 auf, die dem jeweiligen Schleifring 3 bzw. dem Erdungsring 6 zugeordnet sind. Die Bürsten 15 sind jeweils in einer Bürstenhalterung 22 angeordnet, die auch dementsprechende elektrischen Kontaktiereinrichtungen bereitstellt. Dabei sind die Bürsten 15 pro Schleifring 3 nebeneinander und/oder hintereinander angeordnet.

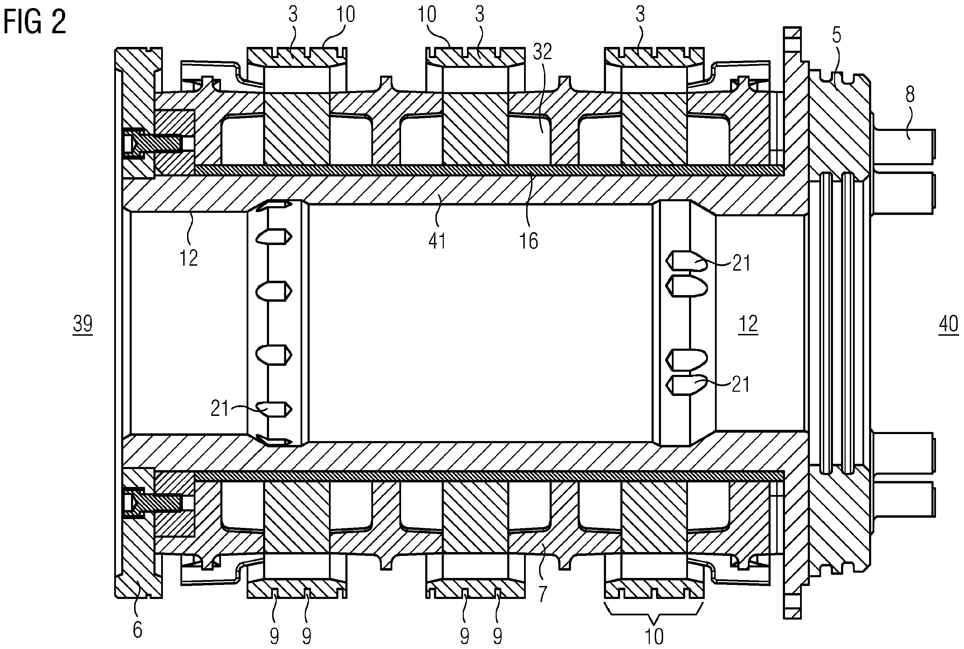

FIG 2 zeigt in einem prinzipiellen Längsschnitt einen Schleifringkörper 2, wobei die Schleifringe 3 axial hintereinander und von jeweiligen Isoliersegmenten 7 voneinander beabstandet sind. Die Schleifringe 3 sind auf einer Isolierhülse 16 angeordnet, die auf einer Tragstruktur 41 bzw. Nabe angeordnet ist. Diese Tragstruktur 41 befindet sich auf elektrisch gleichem Potenzial wie der Erdungsring 6. Jeder der Schleifringe 3 ist mit einem oder mehreren Kontaktbolzen 8 elektrisch kontaktiert, sodass die auf der Lauffläche 10 des jeweiligen Schleifringes 3 bereitgestellte elektrische Energie dem Kontaktbolzen 8 zuführbar ist, um von dort über Leiter, insbesondere Litzenleiter durch die Hohlwelle bzw. Hohlwellenabschnitt zum Wicklungssystem 28 des Rotors 27 geführt zu werden.

Der Schleifringkörper 2 weist an seiner radial inneren, der Welle 4 zugewandten Seite einen axialen Abschnitt auf, der bezüglich der ihn eingrenzenden Endabschnitte 12 zurückgesetzt ist, also einen größeren Innenradius aufweist. In diesen Endabschnitten 12 sind Öffnungen 21 vorhanden, die als Belüftungsbohrungen, bzw. Entlüftungsbohrungen wirken. Dieser vergleichsweise größere Innenradius schafft, sobald der Schleifringkörper 2 sich auf einer Welle 4 bzw. Hohlwelle befindet, einen Hohlraum 11 zwischen den beiden Endabschnitten 12 der Tragstruktur 41, also den axialen Begrenzungselementen des Hohlraumes 11, die als Ringe oder Stege ausgeführt sein können.

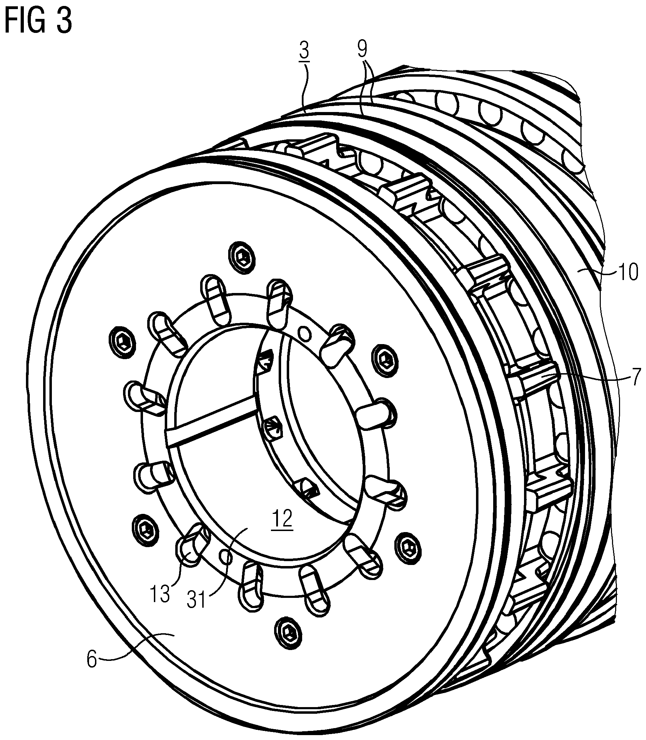

FIG 3 zeigt in einer teilperspektivischen Darstellung einen Schleifringkörper 2 von einer Stirnseite, genauer von der Maschinenseite, bzw. Lagerseite 39. Dabei ist der Erdungsring 6 an der Stirnseite des Schleifringkörpers 2 zu sehen und dessen Beabstandung von einem Schleifring 3 durch ein Isoliersegment 7. In diesem Fall ist auch die Lauffläche 10 eines Schleifrings 3 zu sehen, auf der sich Rillen 9 befinden, die auch eine radiale Belüftung des Schleifrings 3 zulassen. Am Erdungsring 6 sind Öffnungen 13 vorgesehen, die einen Zustrom von Luft über die Öffnungen 21 der Endabschnitte bzw. Begrenzungselemente in den Hohlraum 11 gestatten, der sich zwischen Welle 4 und Schleifringkörper 2 ergibt.

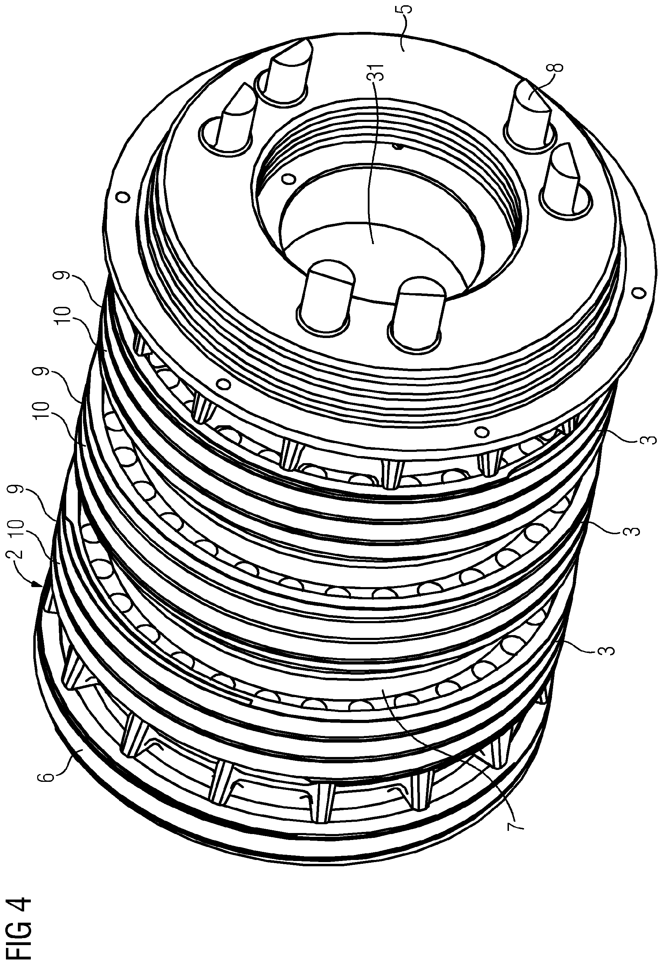

FIG 4 zeigt in einer perspektivischen Darstellung den Schleifringkörper 3 von seiner anderen Stirnseite, der Anschlussseite 40. Aus dem Isolationsring 5 treten axial Kontaktbolzen 8 aus, wobei dabei jeder elektrischen Phase bzw. jedem Schleifring 3 in diesem Fall zwei Kontaktbolzen 8 zugewiesen sind. Axial daran schließt sich eine Abfolge Isolationssegmente 7 und Schleifringe 3 an. Die axiale Reihung wird durch den Erdungsring 6 beendet. Die Laufflächen 10 der einzelnen Schleifringe 3 weisen Rillen 9 auf, die radial durchgängig sind und so gegebenenfalls eine weitere Kühlung des Schleifringes 3 gestatten. Des Weiteren weisen diese Schleifringe 3 axiale Öffnungen auf, die ebenfalls zur Kühlung der Schleifringe 3 beitragen. Unabhängig davon bzw. ergänzend dazu sind die Isoliersegmente 7 an ihrem radial äußeren Rand schaufelähnlich ausgeführt, sodass bei Rotation des Schleifringkörpers 2 eine Luftverwirbelungen eintritt.

Der Schleifringkörper 2 zeigt eine Zentralöffnung 31, in die eine Welle 4, eine Welle 4 mit axialem Hohlwellenabschnitt oder eine Hohlwelle eingesetzt wird. Diese Welle 4 ist mit dem Schleifringkörper 2 drehfest verbunden. Über die Kontaktbolzen 8 und daran angeschlossene elektrische Zuleitungen 35, wird nunmehr über eine Hohlwellenabschnitt der Welle 4 oder der Hohlwelle das Wicklungssystem 28 des Rotors 27 elektrisch versorgt.

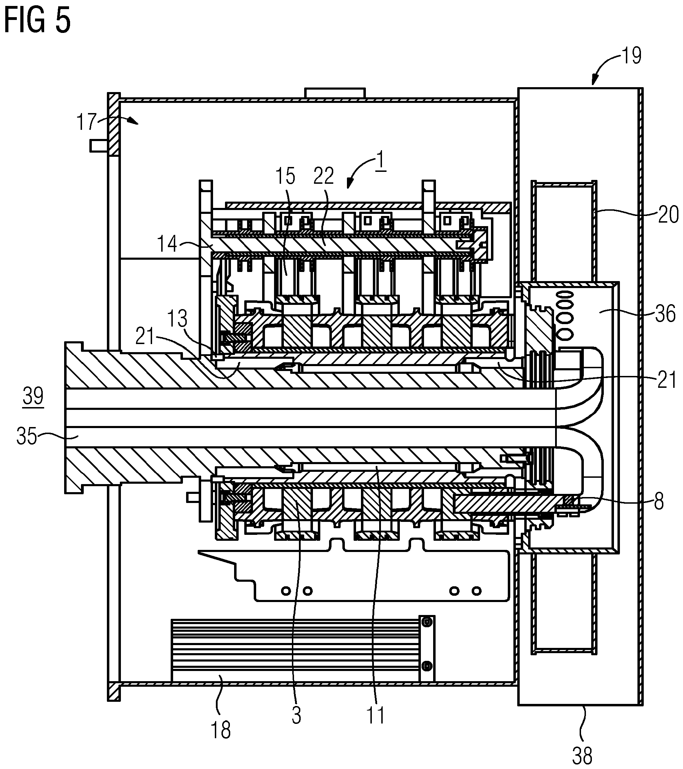

FIG 5 zeigt in einem Längsschnitt ein Schleifringsystem 1, mit einem Schleifringkörper 2 und einer Bürsteneinheit 14. Der Schleifringkörper 2 ist auf der Welle 4 mit Hohlwellenabschnitt bzw. Hohlwelle drehfest positioniert. Von dem Isolationsring 5 und den dort angeordneten Kontaktbolzen 8 sind Zuleitungen 35 in Form von Litzenleitern durch die Hohlwelle bzw. Hohlwellenabschnitt der Welle 4 zum - in dieser Figur - nicht näher dargestellt Wicklungssystem 28 des Rotors 27 geführt. Diese Zuleitung 35 liegen entweder frei in der Hohlwelle oder sind in eine Art Wärmeleitpaste gebettet, um einen guten Wärmekontakt zur Welle 4 zu erhalten.

Durch den nunmehr ausgebildeten Hohlraum 11 zwischen der äu-ßeren Umfangsfläche der Hohlwelle und der inneren Fläche des Schleifringkörpers 2 kann nunmehr über Bohrungen 21 in den auf dem Hohlwellenabschnitt aufliegenden Endabschnitten 12, die insbesondere als Stege ausgeführt sind, eine Kühlung des Schleifringkörpers 2 von innen und der Welle 4 stattfinden.

Die Kühlung erfolgt dabei insbesondere durch einen Luftstrom, der durch eine Lüftereinheit 19 auf der Anschlussseite 40 angeordnet ist. Dabei saugt oder drückt ein Lüfter 20 einen Kühlluftstrom in das Schleifringgehäuse 17, das durch dementsprechende Gestaltung von Führung und Leiteinrichtungen den Kühlluftstrom führt und an die Wärmequellen des Schleifringsystems 1 lenkt.

Der Lüfter 20 in dem vorliegenden Fall ist insbesondere für die Kühlluft 33 durch den Hohlraum 11 verantwortlich. Dabei wird Luft aus der Umgebung, bei einem Windgenerator aus der Gondel, eingesaugt und über einen Luftaustritt 38 am Schleifringsystem 1 wieder ausgegeben.

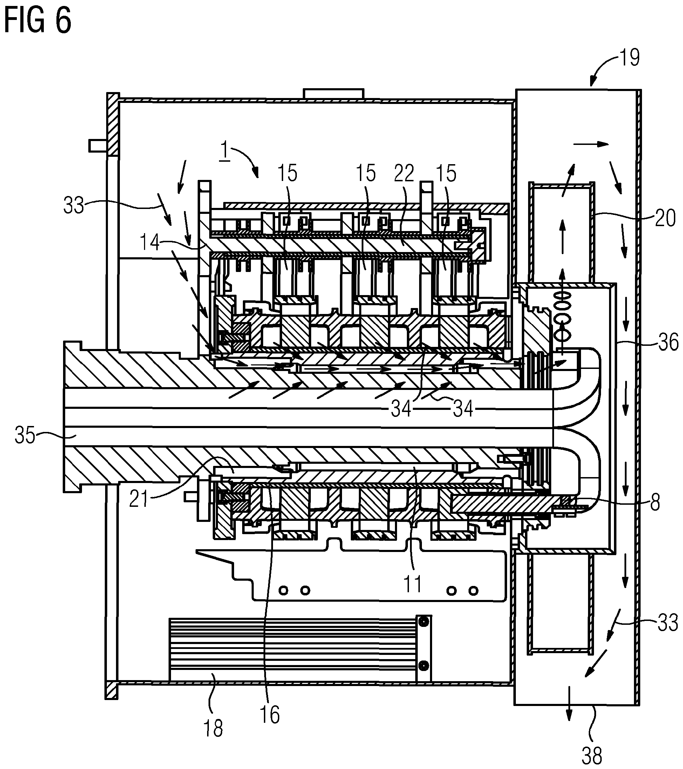

FIG 6 zeigt den Verlauf der Kühlluftströme 33 in einer Anordnung gemäß Figur 5. Dabei ist insbesondere zu sehen, dass ein Wärmeeintrag 34 in die durch den Hohlraum 11 geführten Kühlluft 33 von den Schleifringen 3 als auch von der Welle 4 und damit auch von den Zuleitungen 35 (Litzenleiter oder Schienensystem) erfolgt.

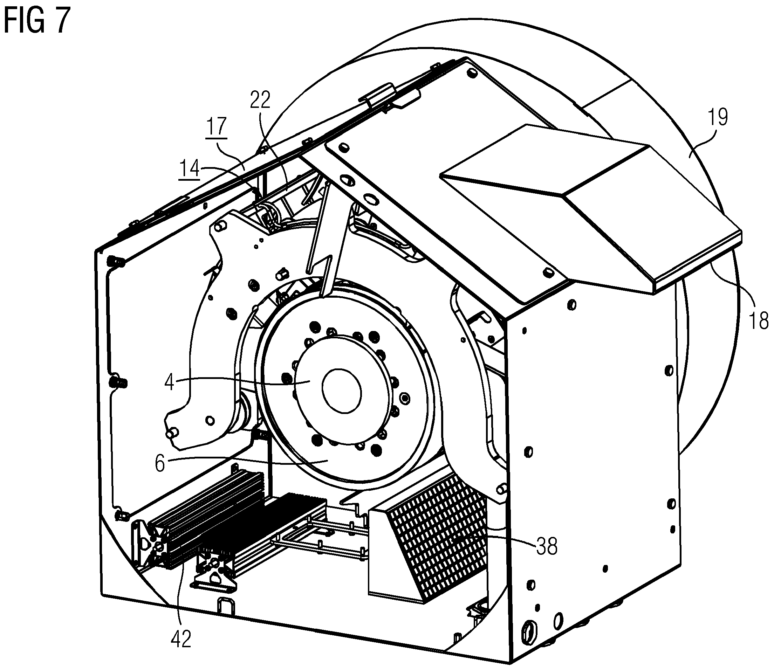

FIG 7 zeigt in perspektivische Darstellung das Schleifringsystem 1 von der Lagerseite 39. Dabei ist das Schleifringgehäuse 17 mit seinen Lufteinlässen 18 und Luftauslässen 38 gezeigt, die eine Kühlung des Schleifringsystems 1 ermöglichen. Die Bürsteneinheit 14 stützt sich im Schleifringgehäuse 17 ab. Radial weiter innen und auf einer Welle 4 bzw. Hohlwelle bzw. Hohlwellenabschnitt positioniert, ist der Schleifringkörper 2 mit seinen Schleifringen 3. Der Erdungsring 6 zeigt Öffnungen 13, über die nunmehr eine Kühlluft 33 über die Bohrungen 21 der Endabschnitte 12 in bzw. aus dem Hohlraum 11 geführt werden kann. Axial an das Schleifringgehäuse 17 schließt sich eine Lüftereinheit 19 an, die den Lüfter 20 als auch deren Verteilung der Kühlluftströme aussteuert.

Mit Hilfe des Lüfters 20 wird nun die erwärmte Luft vorzugsweise aus dem Hohlraum 11 angesaugt und durch die Lüfterkappe 36 aus dem Schleifringgehäuse 17 nach außen abgeführt. Dabei werden auch die Kontaktbolzen 8 mitgekühlt.

Hierdurch können die Temperaturen der Schleifringsystems 1 sowie der gesamten elektrischen Maschine 24 deutlich reduziert werden. Dies führt dazu, dass kleinere Baugrößen der Schleifringsystems 1 möglich werden oder bei gleicher Baugrö-ße höhere Leistungsstufen erreicht werden.

Zusätzlich zu dieser Kühlung des Hohlraumes 11, ist über die Rillen 9 der Laufflächen 10, als auch den axialen Öffnungen in den Schleifringen 3 und den lüfterähnlich ausgeführten Isoliersegmenten 7 eine zusätzliche Kühlung des Schleifringsystems 1 möglich. Die Ausprägungen des Isoliersegments 7 bzw. gegebenenfalls mehrere Isoliersegmente 7 bilden idealerweise dabei einen Lüfter, der zur Verteilung eines Kühlluftstroms in Richtung der zu kühlenden Teilen der elektrischen Maschine 24 vorgesehen ist.

Derartige dynamoelektrische Maschinen 24 mit einem Schleifringsystem 1 werden insbesondere als doppelgespeiste Asynchronmaschinen (ASM) ausgeführt, die als Generatoren bei Windkraftanlagen vorzugsweise im Leistungsbereich zwischen 0,5 und 8 MW eingesetzt werden. Dabei können die Windkraftanlagen On-shore aber auch Off-shore aufgestellt sein.

## Patentansprüche

1. Dynamoelektrische Maschine (24), insbesondere doppelt gespeiste Asynchronmaschine (ASM), mit
- einem Stator (25) und einem auf einer Welle (4) drehfest angeordneten Rotor (27) mit jeweils einem Wicklungssystem (26,28), wobei das Wicklungssystem (28) des Rotors (27) über ein Schleifringsystem (1) elektrisch kontaktierbar ist,
- einer elektrischen Energieübertragungseinheit des Schleifringsystems (1), insbesondere einer Bürsteneinheit (14), wobei pro elektrischer Phase eine oder mehrere Bürsten (15) einem Schleifring (3) zugeordnet sind, wobei die Bürsten (15) an einer Bürstenhalterung (22) angeordnet sind,
- einem Schleifringkörper (2) des Schleifringsystems (1), der axial hintereinander angeordnete, einer elektrischen Phase zugeordnete Schleifringe (3) aufweist, die voneinander isoliert beabstandet sind, wobei der Schleifringkörper (2) mit der Welle (4) drehfest verbunden ist und zumindest abschnittsweise zwischen der Innenseite des Schleifringkörpers (2) und der Welle (4) einen axial beidseitig offenen Hohlraum (11) bildet, wobei die Welle (4) zumindest im Bereich des Schleifringsystems (1) eine Hohlwelle ist, wobei am Hohlraum (11) axial innen Ausnehmungen (21) vorgesehen sind, durch die ein Kühlmedienstrom axial in den Hohlraum (11) eingeleitet werden kann, wobei der Hohlraum (11) als umfängliche Aussparung ausgeführt ist, so dass der Schleifringkörper (2) zumindest auf zwei umfänglich verlaufenden axial voneinander beabstandeten Begrenzungselementen (12) aufliegt, von denen das erste axial verlaufende Ausnehmungen (21) zum Einleiten des Kühlmedienstromes hat, und wobei das erste Begrenzungselement (12) am gesamten Umfang die axial verlaufenden Ausnehmungen (21) zur Zufuhr des Kühlmedienstromes hat, **dadurch gekennzeichnet, dass** in dem dem Schleifringsystem (1) zugeordnetem Hohlwellenabschnitt die Zuleitungen (35) zum Wicklungssystem (28) des Rotors (27) geführt sind, dass das zweite Begrenzungselement (12) axial außen und axial verlaufende Ausnehmungen (21) zur Abfuhr des Kühlmedienstromes hat, durch die der Kühlmedienstrom axial in einen Austrittsbereich ausgeleitet werden kann, dass die Begrenzungselemente (12) durch eine Schrumpfung einstückig mit der Innenseite des Schleifringkörpers (2) und/oder der Welle (4) verbunden sind, und dass das zweite Begrenzungselement (12) am gesamten Umfang die axial verlaufenden Ausnehmungen (21) zur Abfuhr des Kühlmedienstromes hat.

2. Dynamoelektrische Maschine (24), insbesondere doppelt gespeiste Asynchronmaschine (ASM), nach Anspruch 1,
**dadurch gekennzeichnet, dass** im Bereich des Hohlraumes (11) die Welle (4) eine Durchmesserreduktion über eine vorgegebene axiale Länge und/oder der Schleifringkörper (3) eine Durchmessererweiterung aufweist.

3. Dynamoelektrische Maschine (24), insbesondere doppelt gespeiste Asynchronmaschine (ASM), nach Anspruch 1, oder 2, **da durch gekennzeichnet**, dass der Hohlraum (11) Mittel aufweist, die eine labyrinthähnliche und/oder mäandernde Struktur im Hohlraum (11) bilden, um die Verweildauer des Kühlmedienstroms, insbesondere eines Luftstroms, zu erhöhen.

4. Dynamoelektrische Maschine (24), insbesondere doppelt gespeiste Asynchronmaschine (ASM), nach Anspruch 3, **dadur ch gekennzeichnet**, dass der Luftstrom durch zumindest einen Fremd- oder Eigenlüfter generierbar ist.

5. Windkraftanlage mit einer dynamoelektrischen Maschine (24) nach einem der vorhergehenden Ansprüche.

## Claims

1. Dynamoelectric machine (24), in particular double-fed asynchronous machine (ASM), with
- a stator (25) and a rotor (27) which is arranged fixedly on a shaft (4) for conjoint rotation with in each case one winding system (26, 28), it being possible for the winding system (28) of the rotor (27) to be contacted electrically via a slip ring system (1),
- an electric power transmission unit of the slip ring system (1), in particular a brush unit (14), one or more brushes (15) being assigned per electrical phase to a slip ring (3), the brushes (15) being arranged on a brush holder (22),
- a slip ring body (2) of the slip ring system (1) comprising slip rings (3) which are arranged axially behind one another, are assigned to an electrical phase and are spaced apart from one another in an insulated manner, the slip ring body (2) being connected to the shaft (4) for conjoint rotation and forming a cavity (11) which is open axially on both sides at least in portions between the inner side of the slip ring body (2) and the shaft (4), the shaft (4) being a hollow shaft at least in the region of the slip ring system (1), cut-outs (21) being provided axially on the inside on the cavity (11), through which cut-outs a cooling medium flow can be introduced axially into the cavity (11), the cavity (11) being configured as a peripheral cut-out, with the result that the slip ring body (2) lies at least on two bordering elements (12) which run peripherally, are spaced apart axially from one another and of which the first has axially running cut-outs (21) for introducing the cooling medium flow, and the first bordering element (12) having, on the entire periphery, the axially running cut-outs (21) for feeding in the cooling medium flow, **characterized in that** the feed lines (35) are routed to the winding system (28) of the rotor (27) in the hollow shaft portion which is assigned to the slip ring system (1), **in that** the second bordering element (12) has recesses (21) for discharging the cooling medium flow which run axially on the outside and axially and through which the cooling medium flow can be discharged axially into an outlet region, **in that** the bordering elements (12) are connected in one piece by way of a shrink fit to the inner side of the slip ring body (2) and/or the shaft (4), and **in that** the second bordering element (12) has the axially running cut-outs (21) for discharging the cooling medium flow on the entire periphery.

2. Dynamoelectric machine (24), in particular double-fed asynchronous machine (ASM), according to Claim 1, **characterized in that**, in the region of the cavity (11), the shaft (4) has a diameter reduction over a predefined axial length and/or the slip ring body (3) has a diameter increase.

3. Dynamoelectric machine (24), in particular double-fed asynchronous machine (ASM), according to Claim 1 or 2, **characterized in that** the cavity (11) has means which form a labyrinth-like and/or meandering structure in the cavity (11), in order to increase the dwell time of the cooling medium flow, in particular of an air flow.

4. Dynamoelectric machine (24), in particular double-fed asynchronous machine (ASM), according to Claim 3, **characterized in that** the air flow can be generated by way of at least one external or integral fan.

5. Wind power plant with a dynamoelectric machine (24) according to one of the preceding claims.

## Revendications

1. Machine dynamoélectrique (24), notamment machine asynchrone à double alimentation (ASM), comprenant
- un stator (25) et un rotor (27) disposés solidairement en rotation sur un arbre (4) qui comprennent chacun un système d'enroulement (26, 28), le système d'enroulement (28) du rotor (27) pouvant être mis en contact électrique par le biais d'un système de bagues collectrices (1),
- une unité de transmission d'énergie électrique du système de bagues collectrices (1), en particulier d'une unité à balais (14), un ou plusieurs balais (15) étant associés à une bague collectrice (3) par phase électrique, les balais (15) étant disposés sur un porte-balais (22),
- un corps de bague collectrice (2) du système de bagues collectrices (1), qui comporte des bagues collectrices (3) disposées axialement les unes derrière les autres et associées à une phase électrique, qui sont espacées les unes des autres de manière isolée, le corps de bague collectrice (2) étant relié solidairement en rotation à l'arbre (4) et formant au moins par portions une cavité (11), ouverte axialement des deux côtés, entre le côté intérieur du corps de bague collectrice (2) et l'arbre (4), l'arbre (4) étant un arbre creux au moins dans la zone du système de bagues collectrices (1), des évidements (21) étant prévus axialement à l'intérieur de la cavité (11), à travers lesquels un flux de milieu de refroidissement peut être introduit axialement dans la cavité (11), la cavité (11) étant conçue comme un évidement circonférentiel de sorte que le corps de bague collectrice (2) soit en appui au moins sur deux éléments de limitation (12) qui sont espacés axialement, qui s'étendent circonférentiellement dont le premier comporte des évidements (21) s'étendant axialement destinés à introduire le flux de milieu de refroidissement, et le premier élément de limitation (12) comportant sur toute la circonférence les évidements (21) s'étendant axialement afin d'amener le flux de milieu de refroidissement, **caractérisé en ce que,** dans la portion d'arbre creux associée au système de bagues collectrices (1), les conduites d'alimentation (35) sont guidées vers le système d'enroulement (28) du rotor (27), **en ce que** le deuxième élément de limitation (12) comporte des évidements (21) qui s'étendent axialement et axialement à l'extérieur, qui sont destinés à évacuer le flux de milieu de refroidissement, à travers lesquels le flux de milieu de refroidissement peut être évacué axialement jusque dans une zone de sortie, **en ce que** les éléments de limitation (12) sont reliés par rétraction d'une seule pièce au côté intérieur du corps de bague collectrice (2) et/ou de l'arbre (4), et **en ce que** le deuxième élément de limitation (12) comporte sur toute la circonférence des évidements (21) qui s'étendent axialement et qui sont destinés à évacuer le flux de milieu de refroidissement.

2. Machine dynamoélectrique (24), notamment machine asynchrone à double alimentation (ASM), selon la revendication 1, **caractérisée en ce que**, dans la zone de la cavité (11), l'arbre (4) présente une réduction de diamètre sur une longueur axiale spécifiée et/ou le corps de bague collectrice (3) présente une extension de diamètre.

3. Machine dynamoélectrique (24), notamment machine asynchrone à double alimentation (ASM), selon la revendication 1 ou 2, **caractérisée en ce que** la cavité (11) comporte des moyens qui forment dans la cavité une structure en forme de labyrinthe et/ou de méandres. (11) afin d'augmenter le temps de séjour du flux de milieu de refroidissement, en particulier d'un flux d'air.

4. Machine dynamoélectrique (24), notamment machine asynchrone à double alimentation (ASM), selon la revendication 3, **caractérisé en ce que** le flux d'air peut être généré par au moins un ventilateur propre ou externe.

5. Éolienne comprenant une machine dynamoélectrique (24) selon l'une des revendications précédentes.
